Europäisches Patentamt

European Patent Office

Office européen des brevets

(19)

(11) Publication number: **0 117 580**

**B1**

(12) **EUROPEAN PATENT SPECIFICATION**

(45) Date of publication of patent specification: **30.11.88**

(51) Int. Cl.⁴: **G 01 K 3/08,** G 01 K 5/32

(21) Application number: **84200190.1**

(22) Date of filing: **13.02.84**

(54) **An apparatus and method for accurately measuring temperature differences.**

(30) Priority: **14.02.83 NL 8300553**

(43) Date of publication of application:
**05.09.84 Bulletin 84/36**

(45) Publication of the grant of the patent:
**30.11.88 Bulletin 88/48**

(84) Designated Contracting States:
**BE DE FR GB IT NL SE**

(56) References cited:
**DE-B-1 007 078**
**DE-B-2 613 991**
**FR-A- 969 188**
**FR-A-1 375 548**

**F.E. Shinskey: "Distillation Control" 1977, Mc Graw-Hill Book Company, New York, pages 142,143**

**The file contains technical information submitted after the application was filed and not included in this specification**

(73) Proprietor: **THE DOW CHEMICAL COMPANY**
**2030 Dow Center Abbott Road P.O. Box 1967**
**Midland, MI 48640 (US)**

(72) Inventor: **Koolen, Johannes Laurentius Antonius**
**Berkelstraat 3**
**NL-4535 CH Terneuzen (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

The invention relates to an apparatus for measuring temperature differences comprising a first reservoir in fluid communication with a first chamber, said first reservoir/chamber combination containing a first fluid, a second reservoir in fluid communication with a second chamber, said second reservoir/chamber combination containing a second fluid, and means in fluid communication with both chambers, which means are adapted to indicate the temperature difference between the reservoirs. The invention also relates to a method for accurately measuring temperature differences between two environments.

Such an apparatus and method are known from FR—A—1.375.548. This publication describes an apparatus for measuring temperature differences which is simply the combination of two thermometers. The expansion of the fluids in the bulbs of the two thermometers causes differing pressures to be applied via an inert gas onto either side of a capillary tube which is divided with an amount of a non-vaporizable liquid. The movement or position of the liquid then shows the difference in temperatures being measured by each thermometer portion. This system is, of course, no more accurate than simply reading two thermometers and finding the difference in the indicated temperatures.

In chemical processes, it is often desirable to accurately measure a relatively small difference in temperature. For example, it is generally desirable for optimum control of a manual or fully automatic process, to establish an accurate heat balance. This requires as accurate a determination as possible of the difference between the temperature of the reaction mixture entering the reactor and the temperature of the reaction mixture leaving the reactor and/or the difference between the temperature of the heat exchange medium supplied and the temperature of the heat exchange medium discharged. In many cases, this temperature difference to be measured is only in the order of a few degrees centigrade. Therefore, errors in the measured temperature difference, which, in absolute sense, are "small", can be very significant in a relative sense (i.e., as a percentage of the temperature difference), thereby limiting optimum process control. The temperature differences determined by taking the difference between two temperatures measured by means of existing apparatus, such as thermistors, thermocouples, resistance temperature detectors and the like have not, in practice, been found to be sufficiently accurate.

"Distillation Control" by F. G. Schinskey, copyright 1977 by McGraw Hill Inc, pages 142, 143 and "Product Application Data, PAD. A2800-002" from the Foxboro Company, copyright 1982 by The Foxboro Company, describe devices for measuring vapor pressure differences. Such devices are commonly referred to as differential vapor pressure cells (hereinafter referred to as "dVp cells"). The dVp cells comprise a first chamber containing a reference material at a given pressure. The first chamber is in fluid communication with a reservoir maintained in the environment of interest and containing a vapor in equilibrium with its liquid (i.e., a quantity of liquid insufficient to fill the combination of the reservoir and the first chamber). A second chamber, separated from the first chamber by a diaphragm, is directly connected and exposed to the medium whose differential vapor pressure is measured with respect to the vapor pressure of the fluid in the reservoir/chamber combination.

These documents describe that a differential pressure cell can be used as an alternative to a temperature measurement for the monitoring of distillation processes.

FR—A—969,188 teaches that flexible diaphragms can be used to detect the changes in the volume or pressure of a fluid. It is further taught to use two diaphragms and a movable lever or needle to show a difference in pressure between two chambers.

The object of the invention is to provide an apparatus and a method for measuring temperature differences between two environments more accurately than is possible with the known apparatus and methods.

The invention therefore provides an apparatus of the above described type, characterized in that the fluid in each of the reservoirs is a liquid that is in equilibrium with its vapor, in that at least a portion of one wall of the first chamber is a diaphragm, the other side of said diaphragm being at least a portion of the wall of the second chamber; in that means are provided for determining the temperature in or adjacent one of the reservoir combinations, and in that the means in fluid communication with both chambers are adapted to determine the difference in vapor pressures on the diaphragm between the two chambers; and in that the determined pressure differential and the measured reservoir temperature are used to accurately determine the temperature difference between the first and second reservoirs.

The method according to the invention is characterized by determining the temperature and vapor pressure of a first liquid corresponding to the temperature of the first environment and measuring the pressure difference between the vapor pressure of the first liquid and the vapor pressure of a second liquid at a second temperature corresponding to the temperature of the second environment; calculating the vapor pressure of the second fluid from the measured vapor pressure difference and the predetermined value of the pressure of the first fluid; calculating the temperature of said second fluid from the calculated value of the vapor pressure of the second fluid and calculating the temperature difference from the determined value of the temperature of the first fluid and the calculated value of the temperature of the second fluid.

The invention is based on the insight that a differential temperature cell (hereinafter referred

2

to as "dT cell") can advantageously be used in measuring the difference in temperatures between two environments.

The key distinction of the present invention over FR—A—1,375,548 and FR—A—969,188 is that the present invention uses the relationship between liquid temperatures and vapor pressure to calculate temperature differences while the FR—A—1,375,548 relies only on the thermal expansion of a fluid to indicate temperature differences. Even if the diaphragm of FR—A—969,188 was used with the device of FR—A—1,375,548, the fact that thermal expansion is used means it will not be as accurate as the present invention.

Although various equations relating temperature and pressure can be employed, preferably, the fluid contained by each reservoir/chamber combination is a liquid in equilibrium with its vapor and the vapor pressure of a liquid at a certain temperature is interrelated using the formula:

$$^{10}\log P = A - \left(\frac{B}{T+C}\right)$$

wherein:
A, B, C are constants,
T=temperature (°C), and

$$p = \frac{\text{pressure in pascals}}{133} \text{(or the pressure in mm Hg)}$$

It has been found that the apparatus and method according to the invention, as will be described in more detail hereinafter, permits measuring temperature differences in the order of a few degrees centigrade with an accuracy that is 4 to 25 times greater than is possible with prior systems.

The invention will be described in more detail hereinafter with reference to the drawings. In said drawings,

Fig. 1 is diagrammatic representation of a dVp cell of the prior art;

Fig. 2 is a diagrammatic representation of an embodiment of the dT cell of the invention;

Fig. 3 is a diagrammatic representation of a dT cell of the invention prepared using two dVp cells;

Fig. 4 is a diagrammatic representation of one embodiment of the invention for use in measuring temperature differences; and

Fig. 5 graphically shows the relation between the temperature and the vapor pressure of a *n*-butane.

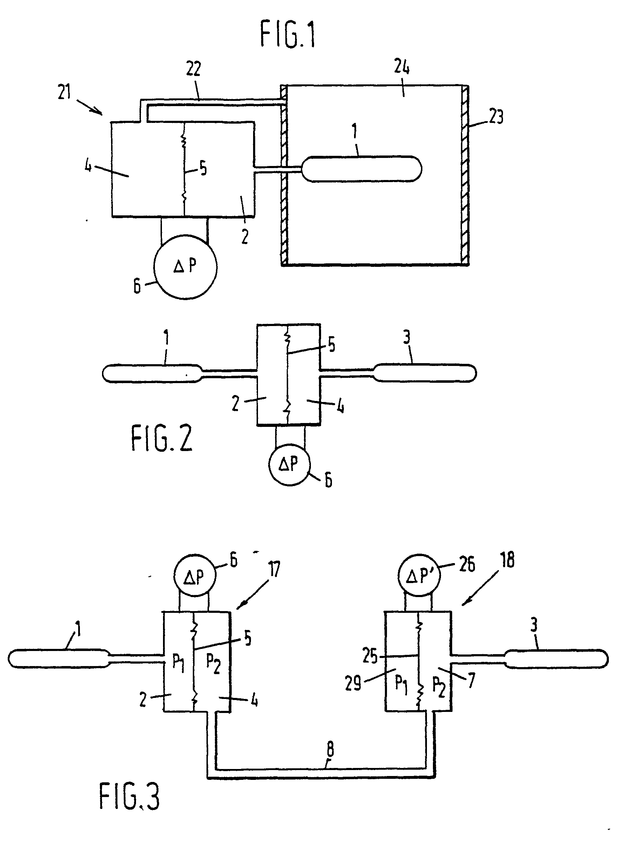

Fig. 1 diagrammatically shows prior art dVp cell for measuring differences in vapor pressure. In the depicted dVp cell, there is provided a single reservoir vessel 1, filled with a fluid (preferably, a liquid/vapor), in fluid communication with a first chamber 2. The reservoir 1 is disposed within a conduit 23 containing a material 24, the differential vapor pressure of which material is to be measured.

One wall of chamber 2 is formed by a diaphragm 5. Disposed at the other side of diaphragm 5, is a chamber 4 directly connected by means of a conduit 22 to the interior of conduit 23 containing material or medium 24. A measuring device 6 is capable of determining the difference in pressure of the fluids in chamber 2 and 4. In operation, the difference in the vapor pressure of material 24 between the point where the reservoir 1 is positioned in conduit 23 and the point where the conduit 22 enters the conduit 23 is determined, with respect to the vapor pressure of the liquid/vapor contained in the combination of reservoir 1 and chamber 2, by the differential pressure measurement device 6.

The dT cell of the present invention, as illustrated in Fig. 2, comprises a first reservoir 1 in fluid communication with a first chamber 2. A diaphragm 5 forms a wall (or at least a portion of a wall) of the first chamber 2, as well as a wall (or at least a portion of a wall) of a second chamber 4. The second chamber 4 is in fluid communication with a second reservoir 3. Reservoirs 1 and 3 contain a fluid, preferably a liquid/vapor combination. A device 6 is capable of measuring the differences in pressure between the fluids contained in chambers 2 and 4.

Alternatively, in order that dVp cells can be employed in the apparatus according to the invention, the dT cell can be prepared as shown in Fig. 3 from two commercial dVp cells. As depicted in this Fig., a first chamber 2 of a first dVp cell 17 is in fluid communication with a reservoir 1. A second chamber 4 of the first dVp cell 17 is separated from the first chamber 2 by a diaphragm 5. The second chamber 4 is in fluid communication, through a balance line 8, to a first chamber 7 of a second dVp cell 18. The first chamber 7 of cell 18 is divided from a second chamber 29 by a diaphragm 25. A measuring device 6 is suitable for measuring the pressure differences existing in chambers 2 and 4 of the first cell 17. A measuring device 26 (optionally employed) is suitable for measuring the pressure differences existing between chambers 7 and 29 of the second dVp cell 18. In the depicted embodiment, since the pressure in chamber 4 of first dVp cell 17, after correction for elevation, and in chamber 7 of second dVp cell 18 are the same, it is not necessary to connect the second chamber 4 of dVp cell 17 directly to a reservoir, as chamber 7 is in fluid communication with the reservoir 3.

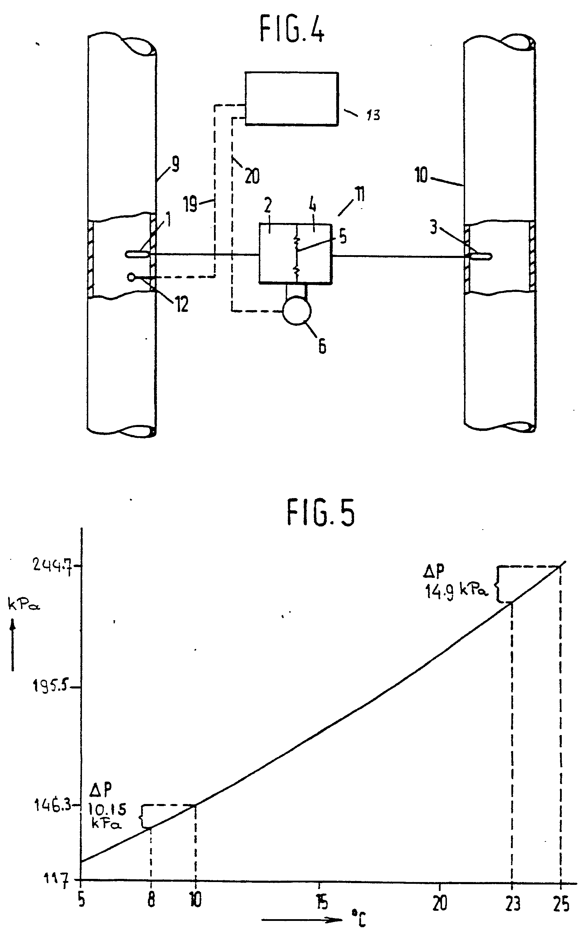

The use of the dT cell in measuring temperature differences is explained by reference to Fig. 4, which is a schematic representation, partially in cross-section, of a system comprising the apparatus of the invention for measuring the temperature difference between the interior of conduit 9 and the interior of conduit 10. Although Fig. 4 depicts the use of the dT cell of Fig. 2 in measuring temperature differences, temperature differences can also be determined using the dT cell depicted by Fig. 3, using similar techniques. In the embodiment shown in Fig. 4, the reservoir 1, which is in fluid communication with first chamber 2, is disposed in the interior of conduit 9 and the reservoir 3, which is in fluid communication with second chamber 4, is disposed in the interior of conduit 10. An element 12 capable of measuring temperature is also disposed within conduit 9, adjacent reservoir 1. For this purpose, any known temperature sensor of sufficient accuracy may be used as the sensor. A computing means 13 is connected to the temperature sensor 12 by means of a lead 19 and to the differential pressure measuring device 6 by means of a lead 20.

In the operation of the apparatus depicted in Fig. 4, the fluid in reservoir 1 exhibits a pressure $(P_1)$ corresponding to the temperature $(T_1)$ of the interior of conduit 9 and the fluid in reservoir 3 exhibits a pressure $(P_2)$ corresponding to the temperature $(T_2)$ of the interior of conduit 10. To optimize accuracy, the chambers and the conduit, if any, connecting a chamber with a reservoir are preferably insulated to minimize temperature differences between the reservoir and the chamber to which they are connected. The difference in pressure $(\Delta P)$ between $P_1$ and $P_2$ is measured by measuring device 6. The temperature $(T_1)$ of the interior of conduit 9 is measured by sensor 12. The temperature difference between the interiors of conduits 9 and 10 can then be calculated from $\Delta P$ and $T_1$ by initially calculating pressure $P_1$ of the fluid in chamber 2 from the known temperature $T_1$, using an equation suitably relating temperature and pressure. The pressure $P_2$ of the fluid in the second chamber 4 is then calculated from the calculated $P_1$ and the measured pressure difference $\Delta P$, using the equation $P_1 + \Delta P = P_2$. The temperature $T_2$ of the fluid in the second chamber 4, which corresponds to the temperature of the interior of conduit 10 is then calculated, using an equation suitably relating pressure and temperature. The difference between the temperature of the fluid contained in reservoir 1, which corresponds to the temperature of the interior of conduit 9 and the temperature of the fluid contained in reservoir 3, which corresponds to the temperature of the interior of conduit 10, can then be calculated.

In actual practice of the embodiment of Fig. 4, a measurable signal e.g., electrical current, varying with the pressure difference $\Delta P$ is supplied to computing means 13 by means of lead 20. A measurable signal, e.g., electrical current, varying with the temperature measured by sensor 12 is fed to computing means 13 by means of lead 19. From these input signals, computing means 13 determines the difference in temperature between the interior of conduits 9 and 10.

Alternatively, using the dT cell depicted in Fig. 3, if the pressure exhibited by a fluid contained in the second chamber 29 of dVp cell 18 is known, the temperature difference can also be determined using the following techniques. The absolute vapor pressure $(P_2)$ in the first chamber 7 of the second cell 18 is determined from the known pressure $(P_k)$ in chamber 29 and the difference in pressure $(\Delta P')$ measured by the pressure measuring device 26, using the equation $P_2 = P_k + \Delta P'$. To obtain maximum accuracy, the pressure $P_k$ is preferably within or as close as possible to the expected pressure range of $P_2$ to be measured from $P_k$ and $\Delta P'$. Subsequently, the temperature $(T_2)$ of the fluid contained by the reservoir 3 can be calculated, using an equation (e.g. Antoine equation) relating temperature and pressure. The pressure $(P_1)$ of the fluid contained in chamber 2 of the first cell 17 is then calculated from $P_2$ and the difference in pressure measured by device 6 (i.e., $P_1 = P_2 + \Delta P$). The temperature $(T_1)$ of the fluid contained in reservoir 1 and chamber 2 is calculated and the difference in temperature is also calculated (i.e. $\Delta T = T_1 - T_2$).

The relation between the vapor pressure and the temperature for a given liquid is preferably calculated using the so-called Antoine equation:

$$^{10}\log P = A - \frac{B}{T+C}$$

wherein
A, B, C are constants, the so-called Antoine constants
T = temperature (°C), and

$$p = \frac{\text{pressure in pascals}}{133} \text{(or the pressure in mm Hg)}$$

The value of the Antoine constants can be read from a chemical handbook such as the twelfth edition of Lange's Handbook of Chemistry, edited by John A. Dean, published by McGraw-Hill, pages 10—28 to 10—54 and other editions of this book and similar chemical handbooks.

In the practice of the invention, although the fluid contained in the reservoir/chamber combinations of the dT cell can be a material which remains gaseous throughout the entire temperature range to which it is exposed, in general, the fluid is advantageously a liquid exhibiting a vapor pressure at the temperatures expected.

For most accurate determination of temperature differences, a wide variation in the vapor pressure of the liquid with small differences in temperature at the temperatures expected is desired. In addition, the vapor pressure exhibited by the liquid employed in the dT cell preferably varies relatively linearly with temperature over the temperature range to be measured. Specifically, by reference to Figure 5, the difference in the vapor pressure exhibited by a liquid for a specific difference in temperature will generally vary with changes in absolute temperature. For example, the vapor pressure of $n$-butane, as calculated using the Antoine equation, is, for the various temperatures specified below:

8°C P=138.5 kPa (1041.0 mm Hg)
10°C P=148.6 kPa (1117.3 mm Hg)

23°C P=229.2 kPa (1723.6 mm Hg)
25°C P=244.1 kPa (1835.7 mm Hg)

From this Table, the difference in vapor pressure, $\Delta P$, is found to vary for the same $\Delta T$ of 2°C depending on the different temperatures involved. Specifically, at $T_1$=10°C, $T_2$=8°C the difference in vapor pressure is 10.15 kPa (76.3 mm Hg), whereas the difference in vapor pressure at $T_1$=25°C and $T_2$=23°C is 14.9 kPa (112.1 mm Hg). The accuracy of a pressure measuring device is typically from 0.1 to 0.7 percent of the range set. The absolute error is the product of this accuracy times the range, i.e.,

0.001 to 0.007×112.1=14.6 to 103 Pa (0.11 to 0.78 mm Hg).

At $T_1$=25°C and $T_2$=23°C, this error corresponds to an absolute error in the temperature difference of 0.002 to 0.014°C (i.e., from 0.1 to 0.7 percent error), whereas at $T_1$=10°C and $T_2$=8°C this error corresponds to an absolute error in the temperature difference of 0.003° to 0.020°C or maximally 1%. As shown, at a specified temperature difference, using the same fluid in each reservoir/chamber combination, the error depends on the differences in the pressure difference exhibited at the highest and lowest temperature to be expected. This error becomes less as the difference in $\Delta P$ at the highest and lowest temperature is minimized, i.e., the error is minimized as over the vapor pressure difference exhibited by the liquid as a specific temperature difference approaches a constant value over the entire temperature range of interest.

In general, to create the maximum changes in pressure with small changes in temperature and the minimum changes in the differences of $\Delta P$ at a specific temperature difference over the temperature range of interest, the fluid is preferably a liquid which exhibits a vapor pressure, the maximum vapor pressure not exceeding the design pressure of the dT cell, at the temperatures of interest. The liquid employed also preferably has a boiling point less than or equal to the lowest temperature encountered by the dT cell during its operation and a critical temperature above the highest temperature to be expected. In addition, the liquid will preferably not decompose at the temperatures expected.

The liquid preferably employed will vary depending on the temperatures to which the fluid is exposed (which will generally vary from −200°C to 500°C, the choice of the specific dT cell employed will depend e.g. on the maximum and minimum difference in vapor pressure capable of being measured by the cell and the maximum expected pressure of the fluid, the desired accuracy and the like. In general, aliphatics and substituted aliphatics such as the alkanes and alkenes of up to 12 carbon atoms (e.g., methane, ethane, ethylene, propane, propene, *i*-butane, *n*-butane, 1-butene, isobutene, *i*-hexane, *n*-hexane, 1-hexene, *i*-pentane, 1-pentene and the like); the alicyclics and substituted alicyclics (e.g., cyclohexane and the like) and water, particularly the aliphatics and substituted aliphatics and alicyclics and substituted alicyclics, are preferred for use in the dT cell for temperatures up to 350°C. Alkanes, alkenes and substituted alkenes or alkanes of up to six carbon atoms, particularly, alkenes such as ethylene, propylene, 1-butene, isobutylene or 1-hexene, are preferred for use with temperatures of up to about 200°C, with methane, ethylene and propylene being preferred at temperatures from −200°C to −20°C. Since the vapor pressures of methane, and ethylene and propylene at higher temperatures, e.g., above 100 to 150°C, can exceed the design pressure of the dT cell, these liquids are preferably not employed at these higher temperatures and less volatile liquids are used. At higher temperatures, e.g., above 500°C, mercury or a liquid which at normal temperatures is a solid such as liquefied sodium, are more preferably employed.

In general, the fluid in both reservoir/chamber combinations of the dT cell will be the same. However, it is possible and sometimes advantageous to use different fluids in the reservoir/chamber combinations of the dT cell.

The fluid is placed in the dT cell using conventional techniques for placing a fluid in a dVp cell. The liquid is placed in the reservoir/chamber combination in an amount sufficient such that, at the temperatures of interest, the liquid never becomes completely vaporized, i.e., during operation the reservoir/chamber combination always contains a liquid with its vapor.

To indicate the excellent accuracy obtained by the method and apparatus of the invention, it is presumed that the temperature range to be expected will vary from 5° to 25°C, that the actual temperature difference will be 2°C and that *n*-butane is contained by both reservoirs of the dT cell. The Antoine constant for *n*-butane are:

A=6.927
B=988.33
C=244.8

The vapor pressure of *n*-butane, as calculated using these constants and the Antoine equation hereinbefore described, is 229.2 kPa (1723.6 mm Hg) for a temperature of 23°C and 244.1 kPa (1835.7 mm Hg) for a temperature of 25°C. Therefore, the $\Delta P$ for temperatures of 23° and 25°C is

244.1−229.2=14.9 kPa (112.1 mm Hg).

Using Fig. 4 for purposes of illustrating this example, it is presumed that the actual temperature of the fluid in the first reservoir 1 is 23°C and the actual temperature of the fluid in the second reservoir 3 is 25°C. In measuring the actual temperature, the error of a calibrated temperature sensor is typically less than 0.05°C. Therefore, the temperature measured by means of the sensor 12 can vary from 22.95 to 23.05°C, with 22.95°C being selected as the measured temperature instead of 23°C. From the Antoine equation, the vapor pressure ($P_1$) calculated using $T_1$=22.95°C is 228.9 kPa (1720.9 mm Hg).

The calculated vapor pressure ($P_2$) in reservoir 3 with the higher temperature will be

228.9+14.9=243.8 kPa (1833 mm Hg).

The corresponding temperature $(T_1)$ of the fluid in reservoir 3 is then calculated to be 24.952°C. The calculated temperature difference then becomes

24.952−22.950=2.002°C.

As compared with the actual temperature difference of 2°C, this leads to an error of only 0.1%.

Using the method of the invention, a similarly small error is found for temperature differences of up to 12°C when the temperature of the higher temperature fluid is 25°C. For example, an error of 0.12% was calculated at a temperature difference of 5°C (i.e., $T_1$=25°C, $T_2$=20°C); 0.11% at a temperature difference of 10°C (i.e., $T_1$=15°C, $T_2$=25°C) and 0.11% at a temperature difference of 12°C (i.e., $T_1$=13°C and $T_2$=25°C).

The accuracy of the measurement of the pressure difference (i.e., the accuracy of the dT cell) will generally be in a range from 0.1 to 0.7%. Therefore, the overall error in measurement of the temperature difference for $T_1$=25°C varies from 0.2 to 0.8% (i.e., 0.1% for the error due to the inaccuracy of the temperature sensor plus the 0.1% to 0.7% error due to the inaccuracy of the dT cell), which corresponds to 0.004° to 0.016°C for a Δt of 2°C, from 0.01° to 0.04°C for a ΔT of 5°C and from 0.02° to 0.08°C at 10°C and from 0.024 to 0.96°C for a ΔT of 12°C. It is evident that, although the relative error varies very little, the absolute error in the temperature difference is dependent on the magnitude of the temperature difference to be measured.

If the temperature difference between the interiors of conduits 9 and 10 is determined by means of two separate sensors, such as sensor 12, the total error, assuming an accuracy of each temperature sensor of 0.05°C, would be equal to: 2×0.05°C or 0.1°C. This corresponds to a 5 percent error for a temperature difference of 2 degrees. Therefore, especially small differences in temperature are measured much more accurately by the method and apparatus according to the invention than by means of existing temperature sensors.

By this example, the apparatus and method of the invention, for a temperature difference of 2°C have been shown to give a result which is 6 to 25 times more accurate than prior systems. With a temperature difference of 12°C, the accuracy of the method according to the invention is at least equal to that which can be obtained by means of known differential temperature measurements.

## Claims

1. An apparatus for measuring temperature differences comprising a first reservoir (1) in fluid communication with a first chamber (2), said first reservoir/chamber combination containing a first fluid, a second reservoir (3) in fluid communication with a second chamber (4), said second reservoir/chamber combination containing a second fluid, and means (6) in fluid communication with both chambers, which means are adapted to indicate the temperature difference between the reservoirs, characterized in that the fluid in each of the reservoirs is a liquid that is in equilibrium with its vapor, in that at least a portion of one wall of the first chamber (2) is a diaphragm (5), the other side of said diaphragm being at least a portion of the wall of the second chamber (4); in that means (12) are provided for determining the temperature in or adjacent one of the reservoir combinations, and in that the means (6) in fluid communication with both chambers are adapted to determine the difference in vapor pressures on the diaphragm between the two chambers; and in that the determined pressure differential and the measured reservoir temperature are used to accurately determine the temperature difference between the first and second reservoirs.

2. The apparatus of claim 1, characterized in that the first and second liquids are the same.

3. The apparatus of claim 1 or 2, characterized in that the liquid is an aliphatic or substituted aliphatic, an alicyclic or substituted alicyclic or water.

4. The apparatus of claim 1, characterized in that the means for determining the difference in vapor pressures of the two chambers is a differential vapor pressure cell.

5. An apparatus according to claim 1, characterized in that the second chamber comprises a first chamber part (4, Fig. 3), the diaphragm (5) being at least a portion of one wall of that first chamber part, and a second chamber part (7), the first and second chamber part being in fluid communication, in that a third chamber (29) is provided having a known pressure, at least a portion of one wall of the third chamber (29) being a second diaphragm (25), the other side of which forms at least a portion of one wall of the second chamber part, and in that means (26) are provided for determining the pressure difference between the second chamber and the third chamber.

6. A method for accurately measuring temperature differences between two environments, characterized by determining the temperature and vapor pressure of a first liquid corresponding to the temperature of the first environment and measuring the pressure difference between the vapor pressure of the first liquid and the vapor pressure of a second liquid at a second temperature corresponding to the temperature of the second environment; calculating the vapor pressure of the second fluid from the measured vapor pressure difference and the pre-determined value of the pressure of the first fluid; calculating the temperature of said second fluid from the calculated value of the vapor pressure of the second fluid and calculating the temperature difference from the determined value of the temperature of the first fluid and the calculated value of the temperature of the second fluid.

**Patentansprüche**

1. Vorrichtung zur Messung von Temperaturunterschieden, umfassend ein erstes Reservoir (1) in fließender Verbindung mit einer ersten Kammer (2), wobei die erste Reservoir/Kammerkombination eine erste Flüssigkeit enthält, ein zweites Reservoir (3) in fließender Verbindung mit einer zweiten Kammer (4), wobei die zweite Reservoir/Kammerkombination eine zweite Flüssigkeit enthält, und Vorrichtungen (6) in fließender Verbindung mit beiden Kammern, die dazu angelegt sind, die Temperaturdifferenz zwischen den Reservoiren anzuzeigen, dadurch gekennzeichnet, daß die Flüssigkeit in jedem der Reservoirs eine Flüssigkeit ist, die im Gleichgewicht mit ihrem Dampf steht, daß mindestens ein Teil einer Wand der ersten Kammer (2) ein Diaphragma (5) ist, und die andere Seite des Diaphragmas mindestens ein Teil der Wand der zweiten Kammer (4) ist; Vorrichtungen (12) zur Feststellung der Temperatur in oder anstoßend an eine der Reservoirkombinationen, vorhanden sind, und daß die Vorrichtungen (6) in fließender Verbindung mit beiden Kammern darauf ausgelegt sind, den Unterschied der Dampfdrücke an dem Diaphragma zwischen den beiden Kammern zu bestimmen; und daß das bestimmte Druckdifferential und die gemessene Reservoirtemperatur verwendet werden, um die Temperaturdifferenz zwischen dem ersten und dem zweiten Reservoir genau zu bestimmen.

2. Vorrichtung nach Anspruch 1, dadurch gekennzeichnet, daß die erste und die zweite Flüssigkeit gleich sind.

3. Vorrichtung nach Anspruch 1 oder 2, dadurch gekennzeichnet, daß die Flüssigkeit aliphatisch oder substituiert aliphatisch, alicyclisch oder substituiert alicyclisch oder Wasser ist.

4. Vorrichtung nach Anspruch 1, dadurch gekennzeichnet, daß die Vorrichtungen zur Bestimmung der Dampfdruckdifferenz der zwei Kammern eine Differential-Dampfdruckzelle ist.

5. Vorrichtung nach Anspruch 1, dadurch gekennzeichnet, daß die zweite Kammer einen ersten Kammerteil (4, Fig. 3) umfaßt, wobei das Diaphragma (5) mindestens ein Teil einer Wand des ersten Kammerteils ist, und einen zweiten Kammerteil (7) umfaßt, wobei der erste und der zweite Kammerteil in fließender Verbindung stehen, daß eine dritte Kammer (29) vorhanden ist, die einen bekannten Druck hat, wobei mindestens ein Teil einer Wand der dritten Kammer (29) ein zweites Diaphragma (25) ist, und deren andere Seite mindestens ein Teil einer Wand des zweiten Kammerteils bildet, und daß Vorrichtungen (26) vorhanden sind zur Bestimmung der Druckdifferenz zwischen der zweiten Kammer und der dritten Kammer.

6. Verfahren zur genauen Messung von Temperaturunterschieden zwischen zwei Umgebungen, dadurch gekennzeichnet, daß die Temperatur und der Dampfdruck einer ersten Flüssigkeit entsprechend der Temperatur der ersten Umgebung bestimmt wird und der Druckunterschied zwischen dem Dampfdruck der ersten Flüssigkeit und dem Dampfdruck einer zweiten Flüssigkeit bei einer zweiten Temperatur, entsprechend der Temperatur der zweiten Umgebung gemessen wird; der Dampfdruck der zweiten Flüssigkeit aus der gemessenen Dampfdruckdifferenz und dem vorbestimmten Wert des Drucks der ersten Flüssigkeit errechnet wird; die Temperatur der zweiten Flüssigkeit aus dem errechneten Wert des Dampfdrucks der zweiten Flüssigkeit berechnet wird und die Temperaturdifferenz aus dem bestimmten Wert der Temperatur der ersten Flüssigkeit und dem berechneten Wert der Temperatur der zweiten Flüssigkeit errechnet wird.

**Revendications**

1. Appareil pour mesurer des différences de température, comportant un premier réservoir (1) en communication, pour le fluide, avec une première chambre (2), ladite première combinaison réservoir/chambre contenant un premier fluide, un second réservoir (3) en communication, pour le fluide, avec une seconde chambre (4), ladite seconde combinaison réservoir/chambre contenant un second fluide, ainsi que des moyens (6) en communication, pour le fluide, avec les deux chambres, moyens qui sont conçus pour indiquer la différence de température entre les réservoirs, caractérisé en ce que le fluide qui se trouve dans chacun des réservoirs est un liquide qui est en équilibre avec sa vapeur; en ce qu'au moins une portion de l'une des parois de la première chambre (2) est une membrane (5), l'autre face de ladite membrane étant au moins une portion de la parci de la seconde chambre (4); en ce que des moyens (12) sont prévus pour déterminer la température dans l'une, ou près de l'une, des combinaisons de réservoir, et en ce que les moyens (6) qui sont en communication, pour le fluide, avec les deux chambres sont conçus pour déterminer la différence des pressions de vapeur exercées sur la membrane entre les deux chambres; et en ce que l'on utilise la différence de pression déterminée et la température du réservoir mesurée pour déterminer avec précision la différence de température entre le premier et le second réservoirs.

2. Appareil selon la revendication 1, caractérisé en ce que le premier et le second liquides sont les mêmes.

3. Appareil selon la revendication 1 ou 2, caractérisé en ce que le liquide est un produit de la série aliphatique ou un produit de la série aliphatique ayant subi une substitution, un produit de la série alicyclique ou un produit de la série alicyclique ayant subi une substitution, ou de l'eau.

4. Appareil selon la revendication 1, caractérisé en ce que les moyens prévus pour déterminer la différence des pressions de vapeur des deux chambres est une cellule à pression de vapeur différentielle.

5. Appareil selon la revendication 1, caractérisé en ce que la seconde chambre est constituée

7

d'une première partie de chambre (4, figure 3), la membrane (5) étant au moins une portion de l'une des parois de cette première partie de chambre, et d'une seconde partie de chambre (7), la première et la seconde parties de chambre étant en communication, pour le fluide; en ce qu'il est prévu une troisième chambre (29) dans laquelle règne une pression connue, au moins une portion de l'une des parois de la troisième chambre (29) étant une seconde membrane (25) dont l'autre face forme au moins une portion de l'une des parois de la seconde partie de chambre; et en ce que des moyens (26) sont prévus pour déterminer la différence de pression entre la seconde chambre et la troisième chambres.

6. Procédé pour mesurer avec précision les différences de température entre deux milieux, caractérisé en ce que l'on détermine la température et la pression de vapeur d'un premier liquide correspondant à la température du premier milieu et que l'on mesure la différence de pression entre la pression de vapeur du premier liquide et la pression de vapeur d'un second liquide à une seconde température correspondant à la température du second milieu; en ce que l'on calcule la pression de vapeur du second fluide à partir de la différence de pression de vapeur mesurée et de la valeur prédéterminée de la pression du premier fluide; en ce que l'on calcule la température dudit second fluide à partir de la valeur calculée de la pression de vapeur du second fluide et que l'on calcule la différence de température entre la valeur déterminée de la température du premier fluide et la valeur calculée de la température du second fluide.

EP 0 117 580 B1

FIG.1

FIG.2

FIG.3

# FIG.4

# FIG.5